Europäisches Patentamt

European Patent Office

Office européen des brevets

(19)

(11) Numéro de publication: **0 121 483**
**B1**

(12) **FASCICULE DE BREVET EUROPEEN**

(45) Date de publication du fascicule du brevet: **24.10.90**

(51) Int. Cl.⁵: **G 01 C 19/16**

(21) Numéro de dépôt: **84400646.0**

(22) Date de dépôt: **30.03.84**

(54) **Appareil gyroscopique ou gyrométrique, notamment gyroaccélérométre à suspension souple et sustentation électrostatique.**

(30) Priorité: **01.04.83 FR 8305464**

(43) Date de publication de la demande:
**10.10.84 Bulletin 84/41**

(45) Mention de la délivrance du brevet:
**24.10.90 Bulletin 90/43**

(84) Etats contractants désignés:
**BE DE GB IT NL SE**

(56) Documents cités:
**DE-B-2 210 995**
**GB-A-1 273 522**
**US-A-4 061 043**

(73) Titulaire: **SOCIETE DE FABRICATION D'INSTRUMENTS DE MESURE (S.F.I.M.) 13, avenue Marcel Ramolfo-Garnier F-91301 Massy (FR)**

(72) Inventeur: **Audren, Jean-Thierry 14, allée des genêts F-91940 Les Ulis (FR)**

(74) Mandataire: **Martin, Jean-Jacques et al Cabinet REGIMBEAU 26, Avenue Kléber F-75116 Paris (FR)**

Courier Press, Leamington Spa, England.

**Description**

La présente invention concerne un appareil gyroscopique ou gyrométrique à suspension souple.

Dans les appareils de ce type, un volant est entraîné en rotation par un arbre rotatif auquel il est relié par un joint tournant. Sous l'effet des couples gyroscopiques, le volant est susceptible d'osciller selon deux degrés de liberté autour d'une position centrale dans laquelle son axe est confondu avec l'axe de l'arbre rotatif.

Lorsque l'on souhaite que cet appareil fonctionne en gyromètre, il est en outre prévu des moyens de rappel du volant propres à exercer sur celui-ci un couple de précession tendant à le ramener vers sa position centrale (dans la suite de la description, ces moyens seront désignés "moteurs de précession"). Ces moteurs de précession peuvent être des électro-aimants fixes exerçant une force d'attraction sur le rotor, réagissant à un signal de détection de l'inclinaison de l'axe du volant selon ses deux degrés de liberté. Un gyromètre de ce type est par exemple décrit dans le FR—2 394 060, au nom de la Demanderesse.

Plus précisément, le joint tournant est généralement constitué par un joint de Hooke comportant quatre barres de torsion perpendiculaires entre elles réunies par un anneau central, de manière à permettre au volant d'incliner son axe selon les deux degrés de liberté d'oscillation. L'anneau central du joint de Hooke agit alors en volant d'inertie intermédiaire, et la valeur de son inertie est choisie de manière à compenser exactement, à la vitesse de rotation du volant, la raideur des barres de torsion. On peut ainsi déterminer les paramètres de la suspension de façon que, à sa vitesse nominale de rotation, le volant ne subisse aucun couple de rappel du fait de la suspension.

On combine ainsi, à la fonction purement mécanique de retenue radiale et d'entraînement en rotation du volant par le joint, une fonction dynamique de compensation de raideur de la suspension.

Une telle structure, connue sous le nom de "gyromètre (ou gyroscope) à suspension élastique compensée", ou "gyromètre accordé", a pour avantage une grande simplicité, impliquant un faible coût, une mise en oeuvre immédiate et une mise au point très facile: le réglage de la compensation se réduit en effet à un ajustage du moment d'inertie du volant intermédiaire, aisé à effectuer par les techniques classiques d'équilibrage de pièces tournantes.

La miniaturisation de ces gyromètres accordés est cependant limitée par l'impossibilité de réduire les inerties à des valeurs très faibles. On se heurte en effet à des impératifs contradictoires d'une part de robustesse mécanique suffisante du joint tournant pour assurer la retenue radiale du volant (compte tenu des vitesses de rotation très élevées, généralement de l'ordre de 400 tours/seconde) et pour le supporter axialement (même en présence d'accélérations importantes), et d'autre part de constante de raideur suffisamment faible, celle-ci devant diminuer en même temps que l'on réduit la masse du volant.

La recherche d'un compromis entre ces contraintes purement mécaniques d'une part et de comportement dynamique d'autre part a jusqu'à présent limité le degré de miniaturisation des gyromètres de ce type.

Plus récemment, on a proposé dans le brevet américain US—A—4 061 043 un gyroscope à deux degrés de liberté, constitué essentiellement d'un rotor en forme de C maintenu par lévitation électrostatique dans une cavité dont les parois sont équipées d'électrodes soumises à des champs électriques assurant cette lévitation. Dans le gyroscope décrit dans le document précité, les électrodes assurant la lévitation assurent un mouvement de translation du rotor et une détection de celle-ci le long de l'axe de rotation.

Un des buts de l'invention est de proposer une structure de gyromètre à suspension élastique qui permette de s'affranchir du dilemme précité et autorise une réduction des inerties suffisante pour permettre une réduction importante des dimensions de l'appareil.

Pour cela, dans l'appareil de l'invention, le volant est libre selon un degré de liberté de translation axiale, et il est prévu des moyens sustentateurs du volant propres à exercer sur celui-ci une force dirigée axialement, ces moyens étant des moyens électrostatiques ou électromagnétiques asservis à des moyens de détection de la position axiale du volant, de manière à maintenir celui-ci en une position axiale prédéterminée.

De cette manière, on découple l'entraînement en rotation et la retenue radiale—qui restent assurés d'une manière classique—d'avec la sustentation axiale du volant—réalisée par des moyens asservis. Du fait de ce découplage, il est possible de réduire considérablement la raideur du joint. Pour cette raison, le gyromètre (ou gyroscope) n'a plus à être accordé, et le besoin d'une compensation par inertie disparaît.

Lorsque l'on souhaite utiliser l'appareil en gyromètre, celui-ci peut comporter également des moyens de rappel du volant propres à exercer sur ce dernier un couple de précession tendant à le ramener vers sa position centrale, ces moyens étant asservis à des moyens de détection des écarts angulaires du volant par rapport à sa position centrale. On peut alors appliquer au volant, outre une force axiale assurant la portance (par les moyens de sustentation), un couple de précession asservissant le volant à sa position centrale.

Avantageusement, les moyens de rappel comportent, pour chaque degré de liberté d'oscillation, au moins deux paires d'électrodes disposées de part et d'autre du volant et fixes par rapport au corps de l'appareil, électriquement polarisées de manière à électriser par influence au moins une partie du volant pour exercer sur celui-ci un couple de précession, les électrodes disposées d'un même côté du volant étant toutes situées dans un même plan, et les électrodes diamétralement opposées de part et d'autre du volant recevant des tensions de même valeur et de signe opposé, de manière à conserver à la partie électrisée du volant une charge globale sensiblement nulle.

Cette dernière caractéristique minimise la variation de charge du volant, aucune évacuation des charges n'étant nécessaire (aux pertes statiques près) lors d'un changement de position du volant. La puissance nécessaire à l'alimentation est réduite d'autant, ainsi que les pertes par effet Joule; ces avantages sont déterminants dans l'optique d'une miniaturisation poussée de l'appareil.

Les moyens sustentateurs comportent de préférence au moins une paire d'électrodes disposées de part et d'autre du volant et fixes par rapport au corps de l'appareil, électriquement polarisées de manière à électriser par influence au moins une partie du volant, pour exercer sur celui-ci la force dirigée axialement permettant sa sustentation.

Avantageusement, les moyens sustentateurs comportent au moins deux paires d'électrodes, les électrodes disposées d'un même côté du volant étant toutes situées dans un même plan et recevant des tensions de même valeur et de signe opposé, de manière à conserver à la partie électrisée du volant une charge globale sensiblement nulle.

De préférence, les paires d'électrodes sont communes aux moyens sustentateurs et aux moyens de rappel, l'appareil comportant en outre des moyens de commutation des électrodes à des signaux issus alternativement des moyens sustentateurs et des moyens de rappel. Les mêmes électrodes servant ainsi à la fois à la sustentation (application d'une force axiale) et à l'asservissement gyrométrique (application des couples de précession).

Ces électrodes peuvent également assurer une troisième fonction de détection de position angulaire ou axiale (ou l'une et l'autre), si l'on prévoit que les moyens de détection de l'écart angulaire du volant par rapport à sa position centrale sont des moyens de mesure de la capacité existante entre une partie conductrice du volant et au moins l'une des électrodes fixes de l'appareil.

Il est alors avantageux que les moyens sustentateurs comprennent des moyens de mesure de la force appliquée au volant, aptes à délivrer un signal accélérométrique représentatif de l'accélération du corps de l'appareil dans la direction axiale. Si l'on connaît avec précision (par exemple après étalonnage) les caractéristiques mécaniques (raideur, inertie) de l'ensemble joint tournant-volant, la détermination de la force de sustentation du volant, ou de la position axiale de celui-ci, à laquelle cette force est asservie, permet de déduire—de façon connue en soi—l'accélération du corps de l'appareil dans la direction axiale.

Sans organe mécanique supplémentaire, on dispose ainsi en un seul appareil d'un gyro-accéléromètre, configuration très avantageuse pour une utilisation sur plateforme stabilisée, mais également—et surtout—dans des systèmes liés (technique dite "strap-down") de très faible encombrement.

D'autres caractéristiques et avantages de l'invention apparaîtront à la lecture de la description détaillée ci-dessous, faite en référence aux dessins annexés, sur lesquels:

la figure 1 est une vue schématique, en coupe suivant un plan axial, d'un gyromètre selon l'invention;

la figure 2 est une vue en plan de la couronne d'électrodes de l'appareil de la figure 1;

la figure 3 est une vue en plan du volant d'inertie de l'appareil de la figure 1;

la figure 4 est une coupe par un plan axial, selon la ligne IV—IV de la figure 3, de ce même volant d'inertie.

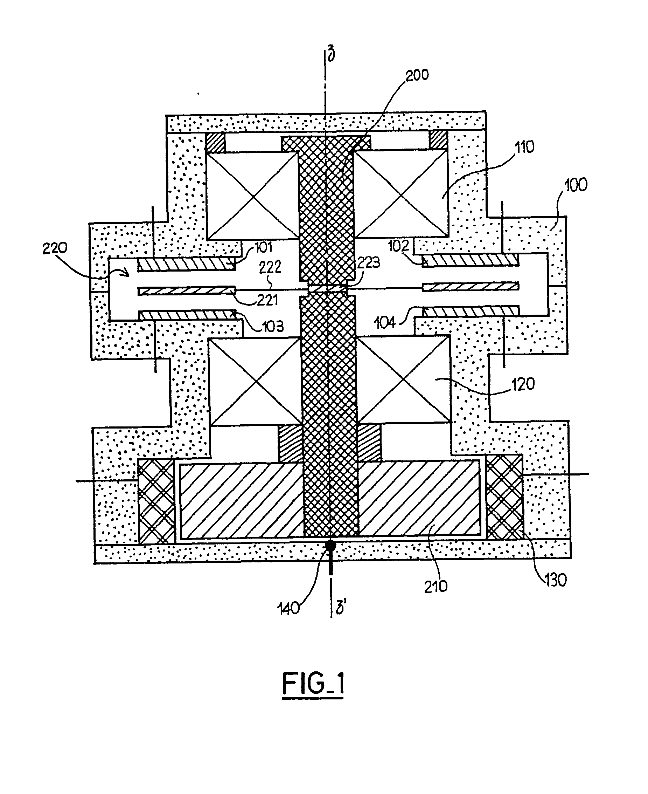

Sur la figure 1, le corps 100 de l'appareil supporte un arbre rotatif 200 par l'intermédiaire d'une paire de roulements 110, 120. L'arbre 200 est entraîné en rotation par exemple par un moteur synchrone dont le stator 130 est solidaire du corps 100, et le rotor 210 solidaire en rotation de l'arbre 200.

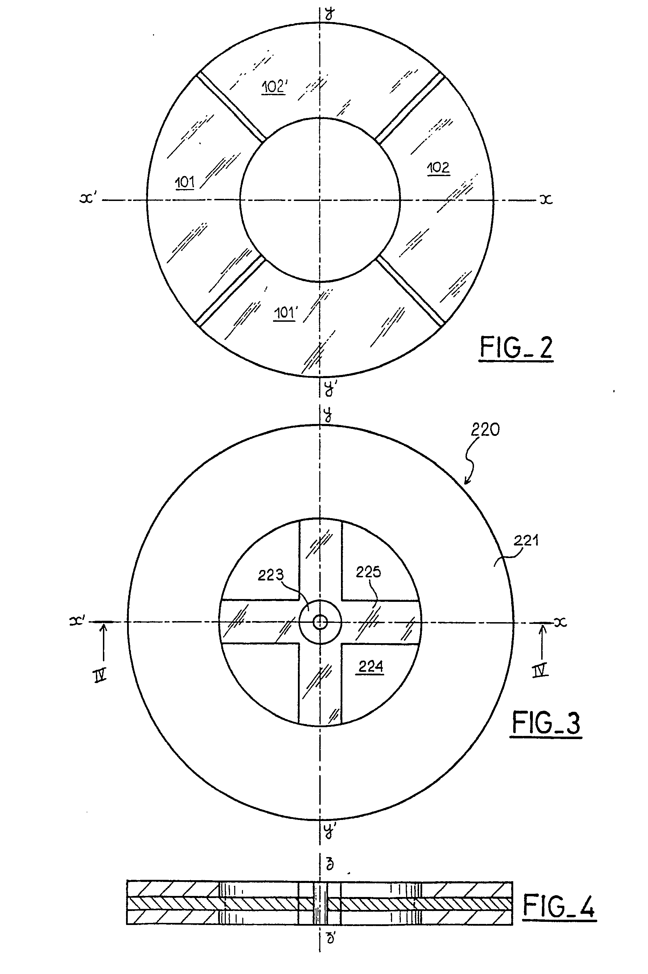

L'arbre 200 entraîne en rotation un équipage tournant 220 formé d'un volant d'inertie 221, d'un joint tournant 222 et d'un moyeu 223. Cet équipage tournant sera décrit plus en détail par la suite, en référence aux figures 3 et 4.

Il est également prévu des séries d'électrodes (101 à 104 sur la figure 1) permettant, grâce à des effets électrostatiques, d'appliquer au volant 221 une force axiale de sustentation, de lui appliquer des couples de précession pour le ramener à sa position centrale, et enfin de mesurer les écarts angulaires et axial par rapport à cette position centrale.

Pour cela, les éelctrodes—qui sont fixes par rapport au corps de l'appareil—sont constituées par deux couronnes situées de part et d'autre du volant. Chacune de ces deux couronnes est divisée en quatre secteurs égaux isolés électriquement: la figure 2 montre par exemple la couronne supérieure, avec ses quatre secteurs 101, 102 et 101' et 102' séparés par des intervalles isolants. La géométrie représentée des secteurs (portions de couronne circulaire et intervalles étroits) n'est pas la seule possible; elle est cependant la plus avantageuse compte tenu de la forme annulaire du volant d'inertie 221.

Sur chacune des électrodes peut être appliquée une tension faisant naître une force d'attraction du volant. Le volant étant électrisé par influence, la force qui apparaît est toujours une force d'attraction, quel que soit le signe de la tension.

En premier lieu, ce système de forces électrostatiques permet d'assurer la fonction de sustentation du volant par application d'une force axiale sur celui-ci. L'application d'une tension positive sur l'électrode 101 et négative sur l'électrode 102 va exercer sur le volant une force axiale dirigée vers le haut de la figure. Pour que la force soit dirigée vers le bas de la figure, ces mêmes tensions devront être appliquées aux électrodes 103 et 104, respectivement.

Cette manière d'appliquer les tensions aux électrodes (tension positive sur l'électrode 101 et négative sur l'électrode 102, ou l'inverse) et plus avantageuse que celle qui consisterait à appliquer des tensions de même signe à l'une et l'autre électrode: en effet, dans ce dernier cas, chaque fois que le volant s'écarterait de sa position centrale, une variation de sa charge globale se produirait, ce qui en nécessiterait une évacuation et donc la circulation d'un courant et des pertes énergétiques. Au contraire, dans la configuration proposée, les seuls déplacements de charges ont lieu d'une région à l'autre du volant, la charge de celui-ci restant globalement nulle.

En second lieu, les électrodes permettent d'appliquer au volant d'inertie les couples de précession nécessaires pour le ramener à sa position centrale. Compte tenu des deux degrés de liberté de pivotement du volant, il est nécessaire d'appliquer des couples selon deux axes perpendiculaires. C'est pourquoi il est prévu sur chacune des couronnes quatre secteurs tels que 101, 102 et 101', 102' identiques deux à deux et décalés de 90°. Les électrodes 101 et 102, en combinaison avec les électrodes 103 et 104 disposées identiquement de l'autre côté du volant, permettent d'appliquer un couple orienté suivant la direction Y' Y. Par la suite, on décrira seulement le manière dont ce couple est appliqué, le couple dirigé suivant X' X étant appliqué de la même manière par les électrodes 101', 102'.

Lorsqu'on souhaite exercer un couple de précession dirigé dans le sens des aiguilles d'une montre sur la figure 1, on applique une tension positive à l'électrode 102 et une tension négative à l'électrode 103 diamétralement opposée (comme il a été expliqué à propos de la sustentation, il est préférable d'appliquer aux électrodes 102 et 103 deux tensions de signe opposé et de même valeur, ce qui permet de conserver au volant une charge globalement nulle en toute circonstance; il serait également possible d'appliquer aux électrodes 102 et 103 deux tensions de même signe et de même valuer, ce qui aurait le même effet mais nécessiterait l'évacuation de charges chaque fois que le volant s'écarterait de sa position d'équilibre).

Un couple de sens inverse sera obtenu en appliquant aux électrodes 101 et 104 deux tensions de même valeur—et avantageusement de signe opposé.

En troisième lieu, les électrodes permettent une détection de la position du volant par mesure capacitive entre le volant, qui constitue une électrode mobile, et au moins l'une des électrodes fixes liées au corps de l'appareil. En déterminant ainsi—de manière connue en soi—les capacités correspondant aux différentes électrodes, on peut obtenir des signaux représentatifs de la position axiale et de la position angulaire du volant, ces signaux étant directement utilisables respectivement pour asservir les moyens sustentateurs et pour assurer le bouclage gyrométrique.

On notera que, pour permettre cette mesure capacitive, le volant d'inertie 221, le joint tournant 222, le moyen 223 et l'arbre 200 doivent être conducteurs et électriquement reliés ensemble ainsi qu'à une borne fixe de l'appareil, par exemple par un contact tournant 140. En ce qui concerne les fonctions de sustentation et d'application des couples de précession, cette liaison est également souhaitable pour maintenir le volant à un potentiel constant, par exemple par mise à la masse.

Les figures 3 et 4 montrent plus précisément le structure de l'équipage tournant 220.

Comme on l'a vu précédemment, les électrodes permettent de soutenir le volant suivant l'axe de rotation de l'ensemble; le joint tournant va donc avoir pour seuls rôles le maintien radial du volant et son entraînement en rotation. Le gyromètre n'étant plus un gyromètre accordé, la raideur du joint peut être choisie aussi faible que possible en torsion, tout en offrant une résistance suffisante à l'encontre des efforts exercés dans le plan du volant (par exemple en présence d'une accélération importante du corps de l'appareil en direction radiale).

Il est ainsi possible de choisir pour le joint 222 une simple membrane métallique trés mince (sur la figure 4, l'épaisseur du joint a été volontairement exagérée), par exemple en alliage d'aluminium. Pour diminuer la raideur en torsion de la membrane, il est possible de pratiquer sur celle-ci des ajours 224, par exemple quatre ajours laissant subsister quatre branches 225 reliant le moyeu 223 et le volant 221.

**Revendications**

1. Appareil gyroscopique ou gyrométrique à suspension souple, comprenant un volant (221) susceptible d'osciller selon deux degrés de liberté autour d'une position centrale dans laquelle l'axe du volant est confondu avec l'axe d'un arbre rotatif (200), ce volant (221) étant relié à l'arbre rotatif (200) par un joint tournant (222) assurant le retenue radiale et l'entraînement en rotation du volant (221) par rapport au corps (100) de l'appareil, caractérisé en ce que le volant (221) est également libre selon un degré de liberté de translation axiale, et en ce qu'il est prévu des moyens sustentateurs (101—104) du volant (221) propres à exercer sur celui-ci une force dirigée axialement, ces moyens étant des moyens électrostatiques ou électromagnétiques asservis à des moyens de détection de la position axiale du volant (221), de manière à maintenir celui-ci en une position axiale prédéterminée.

2. Appareil selon la revendication 1, caractérisé en ce qu'il comporte également des moyens de rappel du volant propres à exercer sur celui-ci un couple de précession tendant à le ramener vers sa position centrale, asservis à des moyens de détection des écarts angulaires du volant par rapport à sa position centrale.

3. Appareil selon la revendication 2, caractérisé en ce que les moyens de rappel comportent, pour chaque degré de liberté d'oscillation, au moins deux paires d'électrodes (101, 103; 102, 104) disposées de part et d'autre du volant et fixes par rapport au corps de l'appareil, électriquement polarisées de manière à électriser par influence au moins une partie (221) du volant pour exercer sur celui-ci un couple de précession, les électrodes disposées d'un même côté du volant étant toutes situées dans un même plan, et les électrodes diamètralement opposées de part et d'autre du volant recevant des tensions de même valeur et de signe opposé, de manière à conserver à la partie électrisée du volant une charge globale sensiblement nulle.

4. Appareil selon l'une des revendications 1 à 3, caractérisé en ce que les moyens sustentateurs comportent au moins une paire d'électrodes disposées de part et d'autre du volant et fixes par rapport au corps de l'appareil, électriquement polarisées de manière à électriser par influence au moins une partie (221) du volant, pour exercer sur celui-ci la force dirigée axialement permettant sa sustentation.

5. Appareil selon la revendication 4, caractérisé en ce que les moyens sustentateurs comportent au moins deux paires d'électrodes (101, 103; 102, 104), les électrodes disposées d'un même côté du volant étant toutes situées dans un même plan et recevant des tensions de même valeur et de signe opposé, de manière à conserver à la partie électrisée du volant une charge globale sensiblement nulle.

6. Appareil selon l'une des revendications 2 à 5, caractérisé en ce que les paires d'électrodes sont communes aux moyens sustentateurs et aux moyens de rappel, l'appareil comportant en outre des moyens de commutation des électrodes à des signaux issus alternativement des moyens sustentateurs et des moyens de rappel.

7. Appareil selon l'une des revendications 2 à 6, caractérisé en ce que les moyens de détection de la position axiale du volant et les moyens de détection de l'écart angulaire du volant par rapport à sa position centrale sont des moyens de mesure de la capacité existante entre une partie conductrice du volant et au moins l'une des électrodes fixes de l'appareil.

8. Appareil selon l'une des revendications 1 à 7, caractérisé en ce que le joint tournant comprend un élément plat (222) d'épaisseur sensiblement constante reliant un moyeu (223) d'entraînement solidaire de l'arbre rotatif (200) au volant (221), ce dernier ayant une forme annulaire, ces éléments étant conducteurs et électriquement reliés ensemble ainsi qu'à une borne fixe de l'appareil par un contact tournant (140) sur l'arbre rotatif.

9. Appareil selon la revendication 8, caractérisé en ce que l'élément plat (222) du joint tournant est ajouré (224) de façon symétrique par rapport à son centre.

10. Appareil selon l'une des revendications précédentes, caractérisé en ce que les moyens sustentateurs sont en outre des moyens de mesure de la force appliquée au volant, aptes à délivrer un signal accélérométrique représentatif de l'accélération du corps de l'appareil dans la direction axiale.

**Patentansprüche**

1. Gyroskopische oder gyrometrische Vorrichtung mit biegsamer Aufhängung, mit einem Schwungrad (221), welches nach zwei Freiheitsgraden um eine zentrale Position zu schwingen vermag, in welcher die Achse des Schwungrades mit der Achse einer Drehwelle (200) zusammenfällt, wobei dieses Schwungrad (221) mit der Drehwelle (200) über eine Drehkupplung (222) verbunden ist, welche die radiale Halterung und den Drehantrieb des Schwungsgrades (221) gegenüber dem Grundkörper (100) der Vorrichtung gewährleistet, dadurch gekennzeichnet, daß das Schwungrad (221) gleichermaßen nach einem Freiheitsgrad axialer Translation frei ist und daß Sustensionsmittel (101—104) für das Schwungrad (221) vorgesehen sind, welche auf dieses eine axial gerichtete Kraft auszuüben vermögen, wobei diese Mittel elektrostatische oder elektromagnetische Mittel sind, die von Detektionsmitteln für die Axialposition des Schwungrades (221) gesteuert werden, derart, daß dieses in einer vorgegebenen Axialposition gehalten wird.

2. Vorrichtung nach Anspruch 1, dadurch gekennzeichnet, daß sie zugleich Rückstellmittel für das Schwungrad aufweist, welche auf dieses ein Präzessionsmoment auszuüben vermögen, das dieses in seine zentrale Position zurückzubringen trachtet, gesteuert von Detektionsmitteln für die Winkelabweichungen des Schwungrades bezüglich seiner zentralen Position.

3. Vorrichtung nach Anspruch 2, dadurch gekennzeichnet, daß die Rückstellmittel für jeden Freiheitsgrad der Schwingung mindestens zwei Paare von Elektroden (101, 103; 102, 104) umfassen, welche auf beiden Seiten des Schwungrades angeordnet und bezüglich des Grundkörpers der Vorrichtung fixiert sind, wobei diese elektrisch derart polarisiert sind, daß sie über Induktion mindestens einen Teil (221) des Schwungrades elektrisieren, um auf dieses ein Präzessionsmoment, auszuüben, wobei die auf der selben Seite des Schwungrades angeordneten Elektroden alle in der selben Ebene liegen und wobei die diametral auf beiden Seiten des Schwungrades einander gegenüberliegenden Elektroden Spannungen derselben Größe und mit umgekehrtem Vorzeichen empfangen, derart, daß auf dem elektrisierten Teil des Schwungrades eine Ladung von insgesamt annähernd Null eingehalten wird.

4. Vorrichtung nach einem der Ansprüche 1 bis 3, dadurch gekennzeichnet, daß die Sustensionsmittel mindestens ein Paar von Elektroden umfassen, welche auf beiden Seiten des Schwungrades angeordnet und gegenüber dem Grundkörper der Vorrichtung fixiert sind, welche elektrisch derart polarisiert sind, daß sie über Induktion mindestens einen Teil (221) des Schwungrades elektrisieren, um auf dieses die axial gerichtete Kraft auszuüben, welche seine Sustension ermöglicht.

5. Vorrichtung nach Anspruch 4, dadurch gekennzeichnet, daß die Sustensionsmittel mindestens zwei Paar von Elektroden (101, 103; 102, 104) umfassen, wobei die auf der selben Seite des Schwungrades angeordneten Elektroden alle in der selben Ebene liegen und Spannungen von gleicher Größe und umgekehrtem Verzeichen empfangen, derart, daß auf dem elektrisierten Teil des Schwungrades eine Gesamtladung von annähernd Null erhalten wird.

6. Vorrichtung nach einem der Ansprüche 2 bis 5, dadurch gekennzeichnet, daß die Elektrodenpaare mit den Sustensionsmitteln und mit den Rückstellmitteln gleich sind, wobei die Vorrichtung außerdem Umschaltmittel für die Elektroden auf Signale aufweist, welche abwechselnd von Sustensionsmitteln und Rückstellmitteln abgeleitet sind.

7. Vorrichtung nach einem der Ansprüche 2 bis 6, dadurch gekennzeichnet, daß die Detektionsmittel für die Axialposition des Schwungrades und die Detektionsmittel für die Winkelabweichung des Schwungrades bezüglich seiner zentralen Position Meßeinrichtungen für die Kapazität sind, welche zwischen einem leitenden Abschnitt des Schwungrades und mindestens einer der mit der Vorrichtung fest verbundenen Elektroden besteht.

8. Vorrichtung nach einem der Ansprüche 1 bis 7, dadurch gekennzeichnet, daß die Drehkupplung ein flaches Element (222) von annähernd konstanter Dicke umfaßt, welches eine fest mit der Drehwelle (200) verbundene Antriebsnabe (223) mit dem Schwungrad (221) verbindet, wobei letzteres eine Ringform besitzt und wobei diese Elemente leitend und elektrisch miteinander sowie mit einer an der Vorrichtung befestigten Anschlußklemme über einen Drehkontakt (140) an der Drehwelle verbunden sind.

9. Vorrichtung nach Anspruch 8, dadurch gekennzeichnet, daß das flache Element (222) der Drehkupplung auf symmetrische Weise bezüglich seiner Mitte Durchbrechungen (224) aufweist.

10. Vorrichtung nach einem der vorangehenden Ansprüche, dadurch gekennzeichnet, daß die Sustensionsmittel außerdem Meßeinrichtungen für die auf das Schwungrad ausgeübte Kraft darstellen, welche in der Lage sind, ein Beschleunigungssignal zu liefern, das rapräsentativ für die Beschleunigung des Grundkörpers der Vorrichtung in Axialrichtung ist.

## Claims

1. Flexibly suspended gyroscope apparatus comprising a fixed body (100), a rotary drive shaft (200) supported in said body, and a flywheel (221) mounted on said drive shaft by a rotary joint (222), said joint serving to retain the flywheel radially and to transmit rotary drive thereto, while leaving said flywheel (221) free to oscillate with two degrees of freedom about a central position in which the axis of the flywheel is aligned with the axis of the drive shaft, the improvement wherein said flywheel is also free for axial translation with one degree of freedom, wherein support means (101—104) are provided for applying an axial force to the flywheel by electrostatic or electromagnetic induction, and wherein axial position detector means are provided for detecting the axial position of the flywheel (221), said support means being servo controlled by said detector means to maintain the flywheel in a predetermined axial position.

2. Apparatus according to claim 1, further including flywheel return means suitable for exerting a precession torque thereon tending to return the flywheel to its central position, said return means being servo controlled by means for detecting angular departures of the flywheel from its central position.

3. Apparatus according to claim 2, wherein said return means comprise at least two pairs of electrodes (101, 102, 103, 104), for each degree of freedom in oscillation, said pairs of electrodes being disposed on either side of the flywheel and being fixed relative to the body of the apparatus, said electrodes being electrically biassed in such a manner as to induce charge on at least a portion (221) of the flywheel in order to exert a precession torque thereon, all the electrodes disposed on the same side of the flywheel being situated in the same plane, and diametrically opposite electrodes on opposite sides of the flywheel being connected to receive potentials of equal magnitude and opposite sign in order to keep the total overall charge on the charged portion of the flywheel substantially zero.

4. Apparatus according to claim 1, wherein the support means comprise at least one pair of electrodes disposed on either side of the flywheel and fixed relative to the body of the apparatus, said electrodes being electrically biassed in such a manner as to induce charge on at least a portion (221) of the flywheel in order to exert an axially directed supporting force thereon.

5. Apparatus according to claim 4, wherein the support means comprise at least two pairs of electrodes (101, 102; 103, 104) with all the electrodes disposed on the same side of the flywheel being situated in the same plane and being connected to receive potentials of equal magnitude and opposite sign in order to keep the total overall charge on the charged portion of the flywheel substantially zero.

6. Apparatus according to claim 2 and claim 4, wherein said pairs of electrodes are common both to the support means and to the return means, the apparatus further including means for switching said electrodes to alternate between receiving signals from said support means and from said return means.

7. Apparatus according to claim 2, wherein said means for detecting the axial position of the flywheel and said means for detecting angular departures of the flywheel relative to its central position are constituted by means for measuring the capacitance between a conductive portion of the flywheel and at least one of the electrodes fixed to the apparatus.

8. Apparatus according to claim 1, wherein the rotary joint comprises a flat member (222) of substantially constant thickness connecting the flywheel to a drive hub (223) which is fixed to the drive shaft (200), said flywheel (221) being annular, and said flywheel, said flat member, said hub and said shaft being electrically conductive and being electrically connected to one another and to a rotating connection (140) to the drive shaft.

9. Apparatus according to claim 8, wherein said flat member of the rotary joint includes openings (224) symmetrically disposed about its center.

10. Apparatus according to claim 1, wherein said support means further include means for measuring the axial force applied to the flywheel and suitable for delivering an accelerometer signal representative of the acceleration of the apparatus body in the axial direction.

EP  0 121 483  B1

FIG_1

1

_102'_

_101_

_102_

_101'_

FIG_2

220

221

223

225

224

IV

IV

FIG_3

FIG_4

2